# EUROPÄISCHE PATENTSCHRIFT

(11) **EP 1 050 518 B1**
(45) Veröffentlichungstag und Bekanntmachung des Hinweises auf die Patenterteilung: **18.07.2007**
(21) Anmeldenummer: 99109016.8
(22) Anmeldetag: 07.05.1999
(51) Int. Cl.: C04B 28/24, C04B 12/04, C04B 41/68

(54) **Silikatmasse**
Silicate composition
Composition de silicate

(43) Veröffentlichungstag der Anmeldung: 08.11.2000
(73) Patentinhaber: Lafarge Roofing Technical Centers GmbH, 61440 Oberursel (DE)
(72) Erfinder: Neupert, Daniel Dr., 63755 Alzenau (DE); Drechsler, Andreas Dr., 63500 Seligenstadt (DE); Merklein, Stephan Dr., 63500 Seligenstadt (DE); Klein, Jürgen Dr., 63110 Rodgau (DE); Reisser, Andrea, 63179 Obertshausen (DE); Wagner, Gebhard Dr., 51519 Odenthal (DE); Schober, Peter Dr., 51375 Leverkusen (DE); Käsler, Karl-Heinz, 51375 Leverkusen (DE)
(74) Vertreter: Schickedanz, Willi

(56) Entgegenhaltungen:
- DE-A- 1 811 528
- DE-A- 19 529 092
- DE-C- 4 413 996
- GB-A- 2 010 876
- US-A- 3 895 956
- DATABASE WPI Week 7844 Derwent Publications Ltd., London, GB; AN 1979-78783a XP002117789 & JP 53 109512 A (NISSAN CHEM IND)
- CHEMICAL ABSTRACTS, vol. 93, no. 26, 29. Dezember 1980 (1980-12-29) Columbus, Ohio, US; abstract no. 244364h, DANTO CO: Seite 310; XP000063911 & JP 55 067590 A (ID.)

## Beschreibung

Die Erfindung betrifft eine Silikatmasse, die zumindest eine Alkalioxid und Siliziumdioxid enthaltende amorphe Bindermatrix aufweist, wobei das Alkalioxid Lithium-, Natrium- und/oder Kaliumoxid ist, und ein bevorzugtes Verfahren zur Herstellung dieser Silikatmasse.

Eine derartige Silikatmasse kann beispielsweise zur Beschichtung von Baukörpern, insbesondere von Dachpfannen, verwendet werden. Betondachsteine, das sind Dachpfannen aus Beton, werden zur Vermeidung von Ausblühungen und zur Erzielung eines ästhetischen Aussehens auf ihrer Oberfläche beschichtet. Die Beschichtung einer Dachpfanne ist im Laufe der Zeit einer starken Korrosion durch die Witterung ausgesetzt. Während bei starker Sonneneinstrahlung im Sommer die Temperatur an der Oberfläche bis auf ca. 80°C ansteigen kann, kann bei Frost im Winter die Temperatur bis auf minus 30°C absinken. Kritisch ist der Angriff durch Frost-Tau-Wechsel sowie durch sauren Regen.

Aus der DE-25 39 718 B2 ist ein Verfahren bekannt zum Beschichten von vorgeformten Bauteilen auf der Basis anorganischer, übliche Zuschlagstoffe enthaltender Bindemittel mit glasurartigen silikat- und/oder phosphathaltigen Überzügen, wobei man aus dem anorganischen Bindemittel und Wasser und üblichen Zuschlagstoffen eine formbare Masse herstellt, aus dieser Bauteile formt, und auf die vorgeformten Bauteile eine wasserglas- und/oder phosphat- und metalloxidhaltige, gegebenenfalls Pigmente und Füllstoffe enthaltende wasserhaltige Paste in dünner Schicht aufträgt und anschließend härtet, wobei man in die Masse lösliche anorganische Salze in einer Mindestmenge von 0,5 Gew.%, bezogen auf das anorganische Bindemittel bzw. im Falle von Kalksandsteinen bezogen auf Bindemittel plus Zuschlagstoff einmischt, welche die wasserhaltige Paste, von der 190 bis 400 g pro m² auf das vorgeformte Bauteil aufgebracht werden, in einen gelartigen, nicht fließfähigen Zustand überführen, worauf sowohl das vorgeformte Bauteil als auch die Beschichtung gehärtet werden. Zur Beschichtung werden wasserhaltige alkalihaltige Pasten aufgebracht mit 42 bis 63 Mol% SiO₂, 11 bis 27 Mol% Alkalioxid und zwischen 19 und 42 Mol% Metalloxid, bezogen auf das Gesamtgewicht dieser Komponenten. Als Metalloxide werden der Paste z.B. ZnO, MgO, PbO, CaO, B₂O₃ und/oder Al₂O₃ zugesetzt.

Das Molverhältnis von Siliziumdioxid zu Alkalioxid liegt zwischen 1,56 und 3,82. Um eine derartige Paste in einen gelartigen, nicht fließfähigen Zustand zu überführen ist die Zugabe von löslichen anorganischen Salzen erforderlich. Gemäß dem hier beschriebenen Verfahren wird die Paste auf das vorgeformte Bauteil aufgebracht und gemeinsam mit diesem entweder im Autoklaven unter Druck bei höheren Temperaturen oder durch rein thermische Behandlung bei Normaldruck ausgehärtet.

Aus der EP 0 247 910 ist eine anorganische Silikatbeschichtung bekannt, bei der die Bindermatrix bezogen auf Feststoffe ungefähr 100 Gewichtsteile Kaliumsilikat, ungefähr 10 bis ungefähr 40 Gewichtsteile Feinpartikel aus Siliziumdioxid und ungefähr 15 bis ungefähr 100 Gewichtsteile Perlglanzpigment enthält. Bei Verwendung von Wasserglas mit einem Molverhältnis von Siliziumdioxid zu Alkalioxid von 3,95 kann das Molverhältnis von Siliziumdioxid zu Alkalioxid in der Beschichtung bis zu 6,15 betragen. Als Verfahren zur Herstellung eines beschichteten Gegenstands ist beschrieben, daß die Beschichtungsmasse auf das Substrat aufgebracht wird und anschließend zur Härtung gemeinsam mit diesem auf eine Temperatur von ungefähr 200°C bis ungefähr 400°C gebracht werden muß.

Aus der US 2,956,958 sind wässerige Mischungen von kolloidalen SiO₂-Partikeln, insbesondere Kieselsole bekannt, wobei die Mischung 1 Gewichtsteil an Partikeln mit einem Durchmesser von mehr als 50 nm und einem mittleren Durchmesser D im Bereich von 50 nm bis 150 nm, x Gewichtsteile mit x = 0 bis 0,07 an Partikeln mit einem Durchmesser von 0,25 D bis 0,4 D und 0,04 bis 0,4- x Gewichtsteile an Partikeln mit einem Durchmesser von 4 nm bis 0,25 D enthält. Die Partikel sind kugelförmige amorphe SiO₂-Partikel und aus den Mischungen werden getrocknete Formkörper oder bevorzugt Beschichtungen hergestellt. Aufgrund der Verwendung von Kieselsolen mit Partikeln definierter unterschiedlicher Durchmesser wird eine besonders hohe Dichte der getrockneten Massen erzielt. Die Trocknung erfolgt bei Temperaturen zwischen 110°C und 400°C.

Aus der WO 95/29 139-A1 ist eine Silikatmasse bekannt, die zumindest eine Alkalioxid und Siliziumdioxid enthaltende amorphe Bindermatrix aufweist und außerdem Oxide aus der Gruppe Aluminiumoxid, Calziumoxid, Titandioxid, Magnesiumoxid, Zirkondioxid und/oder Boroxid enthält. Die amorphe Bindermatrix enthält 4 bis 25 Mol Siliziumdioxid pro Mol Alkalioxid, wobei das Alkalioxid Lithium-, Natrium- und/oder Kaliumoxid ist und die amorphe Bindermatrix außerdem in gleichmäßiger Verteilung pro 100 Mol Siliziumdioxid bis zu 80 Mol Aluminiumoxid und/oder bis zu 45 Mol Kalziumoxid, Titandioxid, Magnesiumoxid, Zirkondioxid und/oder Boroxid enthält. Diese Silikatmasse entsteht durch Aushärten einer wässerigen Silikatmischung, die aus einem stark alkalischen Kieselsol mit einem Feststoffgehalt von 30 - 70 Gew.% hergestellt ist. Diese Silikatmischung härtet nach ihrer Zubereitung sehr schnell zur Silikatmasse aus, ist also nicht lagerstabil.

Aus der EP 0 687 657 B ist eine Polysiloxan-Zusammensetzung, deren Herstellung und deren Verwendung für Beschichtungen bekannt. Die Herstellung erfolgt durch Trocknen einer Mischung, die Wasser als Dispergiermittel enthält und
A) 10 bis 60 Gew.-% mindestens eines Polysiloxanharzes,
B) 5 bis 65 Gew.-% mindestens einer kolloidalen Kieselsäure in Form eines Kieselsols,
C) 5 bis 80 Gew.-% mindestens eines anorganischen Pigments und/oder anorganischen Füllstoffs und
D) 0 bis 30 Gew.-% eines weiteren Zusatzstoffes oder eines Gemisches aus mehreren Zusatzstoffen, wobei die Summe der Komponenten A), B), C) und D), bezogen auf Wirksubstanz, 100 Gew.-% beträgt.
Infolge des hohen Gehaltes an Polysiloxanharz bildet dieses in der getrockneten Mischung die kontinuierliche Phase, in der die anderen Komponenten gebunden sind.

US 3,895,956 offenbart eine Beschichtungsmasse umfassend anorganischen Füllstoff, Silicasol und ein wasserläsliches Hydrophobierungsmittel.

Aufgabe der vorliegenden Erfindung ist es, eine sowohl einen Formkörper als auch eine Beschichtung eines Substrats bildende Silikatmasse zu schaffen, die beständig ist gegen Angriffe durch die Witterung, insbesondere bei Frost-Tau-Wechsel, sowie gegen den Angriff durch Säuren. Die Beschichtung soll durch einfache Verfahren aufbringbar sein und bei einer Temperatur von weniger als 100°C aushärten. Die zur Herstellung der Silikatmasse verwendete Silikatmischung soll in einem geschlossenen Gefäß mindestens drei Monate ohne Beeinträchtigung ihrer Eigenschaften lagerstabil sein.

Die Aufgabe wird erfindungsgemäß dadurch gelöst, daß die amorphe Bindermatrix pro Mol Alkalioxid mehr als 25 Mol Siliziumdioxid enthält, daß die amorphe Bindermatrix außerdem pro 1000 g Siliziumdioxid in gleichmäßiger Verteilung 10 g bis 150 g eines eingebundenen siliconhaltigen hydrophobierenden Additivs enthält und daß die Silikatmasse außerdem pro 1000 g Siliziumdioxid 400 g bis 7000 g Füllstoff enthält, dessen Partikel eine Dicke von weniger als 200 µm besitzen.

Wenn hier Alkalioxid genannt wird, so entspricht dies der in der Silikatanalyse üblichen Angabe des Metallgehalts als Oxid, auch wenn das Metall tatsächlich in Form einer chemischen Verbindung wie Silikat oder dergleichen vorliegt.

Die Bindermatrix enthält einen sehr hohen Anteil von Siliziumdioxid, nämlich mehr als 25 Mol Siliziumdioxid pro Mol Alkalioxid, vorzugsweise 50 bis 500 Mol Siliziumdioxid pro Mol Alkalioxid. Daher ist die erfindungsgemäße Silikatmasse äußerst beständig gegen die in der Aufgabenstellung genannten Angriffe und dennoch in Form einer wässerigen Silikatmischung auf ein Substrat aufbringbar. Aufgrund des geringen Alkaligehaltes ist die zur Herstellung der Silikatmasse verwendete Silikatmischung in einem geschlossenen Gefäß sechs Monate und länger ohne Beeinträchtigung ihrer Eigenschaften lagerstabil. Bei Wasserentzug härtet die Silikatmischung bereits bei Raumtemperatur zu einer wasserunlöslichen festen Silikatmasse aus, ohne daß chemische Härtungsmittel benötigt werden. Diese können jedoch zugesetzt werden, falls eine sehr rasche Aushärtung gewünscht wird.

Der Zusatz des hydrophobierenden Additivs bewirkt schon in geringer Menge eine starke Reduzierung der Wasseraufnahme der ausgehärteten Silikatmasse, eine Verbesserung der Witterungsbeständigkeit und eine sehr gute Einbindung der Füllstoffe und eventuell zugesetzter Pigmente in die ausgehärtete Silikatmasse. Bei der in der Farbentechnik üblichen Kreidungsprüfung, nämlich dem Abreiben der Oberfläche mit einem Tuch, sind auch nach Bewitterung keine Spuren von Pigment und/oder Füllstoff am Tuch feststellbar. Infolge des geringen Anteils an hydrophobierendem Additiv bildet SiO₂ stets die kontinuierliche Phase in der Bindermatrix.

Das siliconhaltige hydrophobierende Additiv weist vorteilhafterweise reaktive Gruppen auf, die eine Einbindung in die Bindermatrix ermöglichen. Es wird empfohlen, ein Polysiloxan einzusetzen.

Polysiloxane werden sehr fest und dauerhaft in die Bindermatrix eingebunden, wenn sie reaktive Gruppen enthalten. Besonders vorteilhaft sind Alkylpolxysiloxane mit alkoxy- und/oder hydroxyfunktionellen Gruppen.

Die vorstehend beschriebenen vorteilhaften Wirkungen werden am besten erzielt, wenn das Polysiloxan überwiegend lineare Siloxanketten mit einem niedrigen bis mittleren Verzweigungsgrad aufweist. Während rein lineare Ploysiloxane eine ölige und hochverzweigte Siloxane harte harzartige und spröde Konsistenz ausweisen, zeichnen sich besonders geeignete Polysiloxane durch eine hohe Flexibilität aus.

Die Silikatmasse kann durch Zusatz verschiedener Füllstoffe optimal an den vorgesehenen Verwendungszweck angepaßt werden. Infolge des Einsatzes feinteiliger Füllstoffe verbleiben zwischen den Partikeln des Füllstoffs nur sehr kleine Zwischenräume, die vom Binder ausgefüllt werden. Daher ist die Silikatmasse frei von Rissen. Vorzugsweise ist die Dicke der Füllstoff-Partikel kleiner als 40 µm. Die Angabe der Dicke bezieht sich bei kugel- und faserförmigen Partikeln auf deren Durchmesser.

Die Silikatmasse ist besonders beständig gegen den Angriff von Säuren, wenn auch der Füllstoff säurebeständig ist. Als kristalline Füllstoffe werden Quarz oder Silikate bevorzugt. Als amorpher Füllstoff wird Glasmehl bevorzugt.

Es versteht sich, daß als Füllstoff auch Mischungen verschiedener kristalliner und/oder amorpher Stoffe eingesetzt werden können. Durch Wahl geeigneter Füllstoffe kann der thermische Ausdehnungskoeffizient einer aus ausgehärteter Silikatmasse gebildeten Beschichtung dem Ausdehnungskoeffizienten des Substrates angepaßt werden, so daß bei Temperaturwechsel keine Risse in der Beschichtung auftreten.

Eine besonders rißfreie Silikatmasse mit glatter Oberfläche wird erhalten, wenn die Bindermatrix einen kristallinen Füllstoff aus der Klasse der Schichtsilikate enthält. Der Füllstoff kann beispielsweise aus Glimmer oder aus einem Gemisch von verschiedenen Schichtsilikaten bestehen.

Die Silikatmasse besitzt eine besonders hohe Zugfestigkeit, wenn sie faserförmige Füllstoffe enthält.

Zur Anpassung an eine gewünschte Farbe kann die Silikatmasse mit Farbpigmenten eingefärbt werden. Als Pigmente eignen sich mineralische Pigmente wie Eisenoxid oder Titandioxid. Es versteht sich, daß auch farbige Füllstoffe, insbesondere farbiges Glasmehl, zum Einfärben verwendet werden können. Auch organische Pigmente wie Phtalocyanin, Chinacridon oder dergleichen können verwendet werden, wenn diese entsprechend DE-C 195 33 081 eingebracht sind.

Nachfolgend wird ein bevorzugtes Verfahren zur Herstellung der erfindungsgemäßen Silikatmasse beschrieben.

Zur Herstellung der Silikatmasse wird eine wässerige Silikatmischung verwendet, die anschließend eingetrocknet wird. Die wässerige Silikatmischung kann ein alkalisches Kieselsol mit mehr als 25 Mol Siliziumdioxid pro Mol Alkalioxid und mit einem Siliziumdioxid-Gehalt im Bereich von 15 bis 65 Gewichtsprozent, vorzugsweise 30 bis 60 Gewichtsprozent, sowie pro 1000 g Siliziumdioxid in gleichmäßiger Verteilung 10 g bis 150 g eines einbindbaren siliconhaltigen hydrophobierenden Additivs zur Bildung der amorphen Bindermatrix und pro 1000 g Siliziumdioxid 400 g bis 7000 g Füllstoff mit einer Dicke von weniger als 200 µm enthalten.

Es wurde festgestellt, daß zur Erzielung einer hohen Lagerstabilität der wässerigen Silikatmischung der pH-Wert des Kieselsols auf den Anteil an hydrophobierendem Additiv abgestimmt sein muß. Bei einem niedrigen Gehalt an hydrophobierendem Additiv kann ein Kieselsol mit 500 Mol Siliziumdioxid pro Mol Alkalioxid eingesetzt werden. Bei höheren Gehalten an hydrophobierendem Additiv kann der Anteil an Alkalioxid höher liegen.

Vorteilhafterweise weisen die Partikel des Kieselsols im Mittel eine spezifische Oberfläche (BET) im Bereich von 35 m²/g bis 600 m²/g, vorzugsweise von 50 m²/g bis 300 m²/g auf. Besonders vorteilhaft ist eine mittlere spezifische Oberfläche (BET) von 160 m²/g.

Besonders geeignet ist ein Kieselsol, dessen Partikel eine zumindest bimodale Partikelgrößenverteilung aufweisen. Auf diese Weise wird eine besonders witterungsbeständige Silikatmasse erhalten.

Als geeignet hat sich ein bimodales Kieselsol erwiesen, bei dem etwa 40 bis 80 Gewichts-% der Partikel eine spezifische Oberfläche (BET) im Bereich von 30 m²/g bis 100 m²/g und etwa 20 bis 60 Gewichts-% der Partikel eine spezifische Oberfläche (BET) im Bereich von 200 m²/g bis 600 m²/g aufweisen. Bevorzugt wird ein bimodales Kieselsol, bei dem etwa 60 Gewichts-% der Partikel eine spezifische Oberfläche (BET) von 50 m²/g und etwa 40 Gewichts-% der Partikel eine spezifische Oberfläche (BET) von 300 m²/g aufweisen.

Zur Herstellung einer farbigen Silikatmasse kann die wässerige Silikatmischung Farbpigmente enthalten. Anorganische Farbpigmente können direkt in die wässerige Silikatmischung eingegeben werden.

Die Einfärbung mit organischen Farbpigmenten wie Phtalocyanin, Chinacridon oder dergleichen ist möglich, wenn der wässerigen Silikatmischung organisches Farbpigment zugesetzt wird, das in einer mit der Silikatmischung verträglichen wässerigen Polymerdispersion dispergiert ist. Als Polymerdispersion eignen sich insbesondere wässerige Polymerdispersionen auf der Basis von Styrol- und/oder Reinacrylat. Das Gewichtsverhältnis von organischem Farbpigment zu Polymer soll den Wert von 1 nicht überschreiten. Aufgrund der Einbindung in die Polymerdispersion ist das organische Farbpigment dauerhaft in der Matrix fixiert.

Die Silikatmasse kann als Oberflächenbeschichtung dienen, beispielsweise als witterungsbeständige Schutzschicht, wenn die vorstehend beschriebene wässerige Silikatmischung auf ein Substrat aufgebracht und getrocknet wird. Die Beschichtung weist eine Porosität von weniger als 20% auf.

Das Aufbringen der wässerigen Silikatmischung zum Beschichten eines Substrats kann durch Streichen, Rollen, Gießen, Tauchen oder vorzugsweise durch Sprühen erfolgen. Optimale Verarbeitungseigenschaften können durch Zusatz handelsüblicher Additive wie Verdicker, Dispergierhilfsmittel, Entschäumer und/oder Netzmittel erzielt werden. Beim anschließenden Trocknen erhärtet die wässerige Silikatmischung zu einer die Beschichtung bildenden Silikatmasse. Das Substrat kann beispielsweise Metall, Frischbeton oder ein harter mineralischer Untergrund wie ausgehärteter Beton oder Putz sein. Auch auf einer porösen Oberfläche wie der von Porenbeton wird eine geschlossene Beschichtung gebildet, die wasserabweisend, jedoch wasserdampfdurchlässig ist.

Das Substrat kann eine Dachpfanne sein. Aufgrund des niedrigen Temperatur bei der Herstellung der Silikatmasse ist diese insbesondere zur Beschichtung von Betondachsteinen geeignet. Die Dicke der Beschichtung kann im Mittel zwischen 20 *µ*m und 2 mm liegen, vorzugsweise beträgt die Dicke 0,1 mm.

Die erfindungsgemäße Silikatmasse eignet sich auch hervorragend zur Beschichtung von Granulaten, Sanden oder Füllstoffen für dekorative Zwecke.

Die Silikatmasse ist nicht nur für Beschichtungen, sondern auch für viele Anwendungen geeignet, bei denen derzeit andere Werkstoffe eingesetzt werden, beispielsweise zum Ausfüllen und Abdichten von Fugen oder zum Verkleben von Baustoffen. Es hat sich gezeigt, daß eine Schamottemehl als Füllstoff enthaltende erfindungsgemäße Silikatmasse bisher üblichen Fugenkitt, der beim Versetzen von Innenrohren von Schornsteinen verwendet wird, zu ersetzen vermag. Hierbei wirkt sich vor allem die hohe Temperaturbeständigkeit und die gute Säurebeständigkeit der ausgehärteten Silikatmasse besonders vorteilhaft aus. Versuche haben überraschend gezeigt, daß selbst nach dem Ausbrennen eines Schornsteins, wobei eine Temperatur von bis zu 1.100°C auftreten kann, die Dichtheit und Festigkeit der Fugen weiterhin gewährleistet ist. Für diese Anwendungen sind Silikatmassen mit einem geringen Anteil an hydrophobierendem Additiv vorteilhaft.

Außerdem kann die Silikatmasse zur Erzielung von Dekorzwecken oder Verzierungen eingesetzt werden. Durch Verwendung von Silikatmischungen mit unterschiedlichen Farben kann ein Marmorierungseffekt in der Silikatmasse erreicht werden.

Die Herstellung erfindungsgemäßer Silikatmassen, die unterschiedlich zusammengesetzt sind, und deren Anwendung wird nachfolgend anhand von 22 Ausführungsbeispielen beschrieben.

Die nachstehend beschriebenen Kieselsole sind Erzeugnisse der Bayer AG, Leverkusen. Bei der Beschreibung von Polysiloxanen sind die für Silicon-Struktureinheiten üblichen Symbole angegeben, wie beispielsweise im Buch von Walter Noll "Chemie und Technologie der Silicone", Verlag Chemie, Weinheim, 1968, Seite 3, beschrieben. Mit "M" werden monofunktionelle, mit "D" difunktionelle, mit "T" trifunktionelle Baueinheiten der Organopolysiloxane und mit "Me" Methylgruppen bezeichnet. Die nachstehend beschriebenen Polysiloxanzubereitungen sind Erzeugnisse der GE Bayer Silicones GmbH & CO KG, Leverkusen.

### Ausführungsbeispiel 1

In 360 g eines wässerigen Kieselsols mit einem SiO₂-Gehalt von 50 Gewichts-%, einem Molverhältnis von 190 Mol SiO₂ pro Mol Na₂O und einer mittleren Partikelgröße mit einer spezifischen Oberfläche (BET) von 150 m²/g mit einer bimodalen Partikelgrößenverteilung, wobei 60 Gewichts-% der Solpartikel eine spezifische Oberfläche (BET) von 50 m²/g und 40 Gewichts-% eine spezifische Oberfläche (BET) von 300 m²/g aufweisen, wurde als Farbpigment 20 g rotes Eisenoxidpigment mit einer Partikelgröße von weniger als 1 µm eingerührt. Danach wurde als Füllstoff 160 g Glimmer mit einer mittleren Partikelgröße von 35 *µ*m zugegeben und 10 Minuten lang mit Hilfe eines Dissolvers bei hoher Schergeschwindigkeit von 12 m/s bis 15 m/s dispergiert. Anschließend wurde als hydrophobierendes Additiv 40 g einer wässerigen Dispersion mit einem Gehalt von 50 Gewichts-% an hydroxyfunktionellem Alkylpolysiloxan mit niedrigem bis mittleren Verzweigungsgrad zugegeben und bei niedriger Schergeschwindigkeit von etwa 3 m/s durchmischt. Als hydroxyfunktionelles Alkylpolysiloxan wurde "Baysilone Imprägnieremulsion 3657" mit der Struktur T(Me)₆₀D(Me)₄₀ verwendet.

Es hat sich gezeigt, daß das Dispergieren von Pigment und Füllstoff bei einer höheren Viskosität schneller möglich ist. Daher wurden im Ausführungsbeispiel 2 zu Anfang nur 2/3 der Gesamtmenge an Kieselsol vorgelegt und nach Dispergieren von Pigment und Füllstoff das restliche Drittel der Gesamtmenge an Kieselsol zugegeben.

### Ausführungsbeispiel 2

In 240 g des im Ausführungsbeispiel 1 beschriebenen wässerigen Kieselsols wurde als Farbpigment 20 g rotes Eisenoxidpigment mit einer Partikelgröße von weniger als 1 *µ*m eingerührt. Anschließend wurde als Füllstoff 160 g Glimmer mit einer mittleren Partikelgröße von 35 µm zugegeben und 5 Minuten lang mit Hilfe eines Dissolvers bei hoher Schergeschwindigkeit von 12 m/s bis 15 m/s dispergiert. Danach wurden bei niedriger Schergeschwindigkeit von etwa 3 m/s weitere 120 g des wässerigen Kieselsols und als hydrophobierendes Additiv 40 g der im Ausführungsbeispiel 1 beschriebenen wässerigen Alkylpolysiloxan-Dispersion zugegeben und durchmischt.

In beiden Fällen wurde jeweils eine sedimentationsstabile viskose Silikatmischung erhalten, die in einem verschlossenen Gefäß mehr als drei Monate ohne Änderung der Eigenschaften gelagert werden konnte.

Da Glimmer thixotropierend und damit verdickend wirkt, wurde mit dem relativ geringen Anteil an Füllstoff eine für die Verarbeitung günstige Viskosität erreicht.

In einem ersten Beschichtungsversuch wurde die Silikatmischung mittels einer Sprühpistole auf einen ausgehärteten Betondachstein als dünne gleichmäßige Schicht aufgetragen. Die Schicht war bei Raumtemperatur bereits nach 2 Stunden berührungstrocken und nach ca. 24 Stunden bei Raumtemperatur vollständig ausgehärtet.

In einem zweiten Beschichtungsversuch wurde die Silikatmischung mittels einer Sprühpistole auf einen ungehärteten Betondachstein als dünne gleichmäßige Schicht aufgetragen. Die vollständige Aushärtung der Schicht erfolgte gemeinsam mit der Aushärtung des Betondachsteins innerhalb von 6 Stunden bei 60° C in feuchter Atmosphäre.

In beiden Beschichtungsversuchen wurde eine im Mittel 100 *µ*m dicke gleichmäßige defektfreie rote Beschichtung mit seidigem Glanz erhalten. Wassertropfen perlen von der Oberfläche ab und dringen praktisch nicht in die Beschichtung ein. Die Beschichtung ist witterungsstabil.

In allen nachfolgenden Beschichtungsbeispielen wurde die Silikatmischung auf ausgehärtete Betondachsteine aufgebracht.

### Ausführungsbeispiel 3

Dieses Ausführungsbeispiel entspricht dem Ausführungsbeispiel 2, jedoch wurde als hydrophobierendes Additiv 40 g "Baysilone Imprägnieremulsion 3641" verwendet, eine wässerigen Dispersion mit einem Gehalt von 50 Gewichts-% an hydroxyfunktionellem Alkylpolysiloxan mit der Struktur T(Me)₈₇D(Me)₁₀M(Me)₃. Eine mit dieser Silikatmischung hergestellte Beschichtung war witterungsstabil, jedoch im Frost-Tau-Wechsel etwas geringer beständig als im Ausführungsbeispiel 2. Die Wasseraufnahme war gering, jedoch höher als im Ausführungsbeispiel 2.

### Ausführungsbeispiel 4

Dieses Ausführungsbeispiel entspricht dem Ausführungsbeispiel 2, jedoch wurde als hydrophobierendes Additiv 60 g "Baysilone Imprägnieremulsion LD" verwendet, eine wässerigen Dispersion mit einem Gehalt von 33 Gewichts-% an methoxyfunktionellem Alkylpolysiloxan mit der Struktur T(Me)ₙD(Me/Dodecyl)ₙ mit n = 1 bis 10. Eine mit dieser Silikatmischung hergestellte Beschichtung war witterungsstabil, jedoch im Frost-Tau-Wechsel etwas geringer beständig als im Ausführungsbeispiel 2. Die Wasseraufnahme war gering, jedoch höher als im Ausführungsbeispiel 2. Wassertropfen sind abgeperlt.

### Ausführungsbeispiel 5

Dieses Ausführungsbeispiel entspricht dem Ausführungsbeispiel 2, jedoch wurde als hydrophobierendes Additiv 35 g einer wässerigen Dispersion mit einem Gehalt von 60 Gewichts-% an Dimethylpolysiloxan mit einer Viskosität von 500 mPa·s verwendet. Eine mit dieser Silikatmischung hergestellte Beschichtung war vergleichbar mit der aus Ausführungsbeispiel 2, jedoch war eine erhöhte Kreidungstendez feststellbar.

### Ausführungsbeispiel 6

Dieses Ausführungsbeispiel entspricht dem Ausführungsbeispiel 2, jedoch wurde als hydrophobierendes Additiv anstelle eines hydroxyfunktionellen Alkylpolysiloxans 80 g "Baysilone Imprägniermittel SK" verwendet, eine 25 %ige wässerige Lösung von Kalium-Methyl-Siliconat. Eine mit dieser Silikatmischung hergestellte Beschichtung war witterungsstabil, jedoch im Frost-Tau-Wechsel etwas geringer beständig als im Ausführungsbeispiel 2. Die Wasseraufnahme war gering, jedoch deutlich höher als im Ausführungsbeispiel 2.

Aufgrund der in den Ausführungsbeispielen 2 bis 6 erhaltenen Ergebnisse wurde für die nachfolgenden Ausführungsbeispiele das in den Ausführungsbeispielen 1 und 2 eingesetzte hydroxyfunktionelle Alkylpolysiloxan mit der Struktur T(Me)₆₀D(Me)₄₀ verwendet.

### Ausführungsbeispiele 7 bis 11

In den nachfolgend beschriebenen Ausführungsbeispielen 7 bis 11 wurde der Anteil an hydrophobierender Alkylpolysiloxan-Dispersion variiert.

Für die Silikatmischungen wurden das gleiche wässerige Kieselsol und die gleiche wässerige Alkylpolysiloxan-Dispersion wie im Ausführungsbeispiel 1 verwendet. In 2/3 der Gesamtmenge des wässerigen Kieselsols wurde als Farbpigment 20 g rotes Eisenoxidpigment mit einer Partikelgröße von weniger als 1 *µ*m eingerührt. Anschließend wurde als Füllstoff 400 g Quarzmehl mit einer mittleren Partikelgröße von 30 µm und als Verdicker 1,4 g Bentone EW der Firma Rheox GmbH, Leverkusen, zugegeben und 5 Minuten lang mit Hilfe eines Dissolvers bei hoher Schergeschwindigkeit von 12 m/s bis 15 m/s dispergiert. Bentone EW ist ein hochgereinigtes Magnesium-Schichtsilikat. Danach wurden bei niedriger Schergeschwindigkeit von etwa 3 m/s das restliche Drittel des wässerigen Kieselsols und als hydrophobierendes Additiv die wässerige Alkylpolysiloxan-Dispersion zugegeben und durchmischt.

### Ausführungsbeispiel 7

Die Silikatmischung enthielt 360 g Kieselsol und 40 g Alkylpolysiloxan-Dispersion. Das Ergebnis ist vergleichbar mit dem Ausführungsbeispiel 2: Eine ausgehärtete Beschichtung zeigte eine sehr geringe Wasseraufnahme und sehr deutliches Abperlen von Wassertropfen. Aufgrund des anderen Füllstoffs ist die Oberfläche kratzfester, jedoch matter als im Ausführungsbeispiel 2.

### Ausführungsbeispiel 8

Die Silikatmischung enthielt 320 g Kieselsol und 80 g Alkylpolysiloxan-Dispersion. Der höhere Gehalt an Alkylpolysiloxan-Dispersion führte bei einer ausgehärteten Beschichtung zu noch geringerer Wasseraufnahme, jedoch war die Härte der Beschichtung geringer als im Ausführungsbeispiel 7.

### Ausführungsbeispiel 9

Die Silikatmischung enthielt 380 g Kieselsol und 20 g Alkylpolysiloxan-Dispersion. Eine ausgehärtete Beschichtung zeigte im Vergleich zu Ausführungsbeispiel 7 eine etwas höhere Wasseraufnahme und deutliches Abperlen von Wassertropfen.

### Ausführungsbeispiel 10

Die Silikatmischung enthielt 390 g Kieselsol und 10 g Alkylpolysiloxan-Dispersion. Eine ausgehärtete Beschichtung zeigte im Vergleich zu Ausführungsbeispiel 9 eine noch höhere Wasseraufnahme und weniger deutliches Abperlen von Wassertropfen.

### Ausführungsbeispiel 11

Dieses Ausführungsbeispiel wurde als Vergleichsversuch ohne hydrophobierendes Additiv ausgeführt. Die Silikatmischung enthielt 400 g Kieselsol und keine Alkylpolysiloxan-Dispersion. Eine ausgehärtete Beschichtung nahm Wasser auf, und Wassertropfen sind nicht abgeperlt. Die Beschichtung war bei der Kreidungsprüfung nicht beständig.

Die Ausführungsbeispiele 7 bis 11 haben gezeigt, daß mit zunehmendem Gehalt an Alkylpolysiloxan die Härte und die Farbintensität abnehmen. Das beste Resultat wurde gemäß Ausführungsbeispiel 7 erreicht.

### Ausführungsbeispiel 12

Für die Silikatmischungen wurden das gleiche wässerige Kieselsol und die gleiche wässerige Alkylpolysiloxan-Dispersion wie im Ausführungsbeispiel 1 verwendet. In 360 g des wässerigen Kieselsols wurde als Farbpigment 20 g rotes Eisenoxidpigment mit einer Partikelgröße von weniger als 1 *µ*m eingerührt. Danach wurde als Füllstoff 550 g Quarzmehl mit einer mittleren Partikelgröße von 30 *µ*m zugegeben und 10 Minuten lang mit Hilfe eines Dissolvers bei hoher Schergeschwindigkeit von 12 m/s bis 15 m/s dispergiert. Danach wurden 6 g 50 %-ige KOH-Lösung als Verflüssiger eingerührt, so daß das Molverhältnis 70 Mol SiO₂ pro Mol Alkalioxid betrug.

Anschließend wurden 40 g der wässerigen Alkylpolysiloxan-Dispersion zugegeben und bei niedriger Schergeschwindigkeit von etwa 3 m/s durchmischt. Eine damit hergestellte Beschichtung war mineralisch matt und sehr widerstandsfähig.

### Ausführungsbeispiel 13

Für die Silikatmischungen wurden das gleiche wässerige Kieselsol und die gleiche wässerige Alkylpolysiloxan-Dispersion wie im Ausführungsbeispiel 1 verwendet. In 360 g des wässerigen Kieselsols wurde als Farbpigment 20 g rotes Eisenoxidpigment mit einer Partikelgröße von weniger als 1 µm eingerührt. Danach wurde als Füllstoff 550 g Quarzmehl mit einer mittleren Partikelgröße von 30 *µ*m zugegeben und 10 Minuten lang mit Hilfe eines Dissolvers bei hoher Schergeschwindigkeit von 12 m/s bis 15 m/s dispergiert. Danach wurden 10 g 50 %-ige KOH-Lösung als Verflüssiger eingerührt, so daß das Molverhältnis 50 Mol SiO₂ pro Mol Alkalioxid betrug. Anschließend wurden 40 g der wässerigen Alkylpolysiloxan-Dispersion zugegeben und bei niedriger Schergeschwindigkeit von etwa 3 m/s durchmischt. Eine damit hergestellte Beschichtung war mineralisch matt und sehr widerstandsfähig.

### Ausführungsbeispiel 14

Für die Silikatmischungen wurden das gleiche wässerige Kieselsol und die gleiche wässerige Alkylpolysiloxan-Dispersion wie im Ausführungsbeispiel 1 verwendet. In 360 g des wässerigen Kieselsols wurde als Farbpigment 20 g rotes Eisenoxidpigment mit einer Partikelgröße von weniger als 1 *µ*m eingerührt. Danach wurde als Füllstoff 140 g Glimmer mit einer mittleren Partikelgröße von 35 µm zugegeben und 10 Minuten lang mit Hilfe eines Dissolvers bei hoher Schergeschwindigkeit von 12 m/s bis 15 m/s dispergiert. Danach wurden 21 g 50 %-ige KOH-Lösung als Verflüssiger eingerührt, so daß das Molverhältnis 26 Mol SiO₂ pro Mol Alkalioxid betrug. Anschließend wurden 40 g der wässerigen Alkylpolysiloxan-Dispersion zugegeben und bei niedriger Schergeschwindigkeit von etwa 3 m/s durchmischt. Es wurde eine relativ dünnflüssige Silikatmischung erhalten. Eine damit hergestellte Beschichtung war stark seidenglänzend.

### Ausführungsbeispiel 15

Die Silikatmischung entspricht der des Ausführungsbeispiels 7, jedoch wurde als Verdicker 0,5 g Kelzan der Firma Monsanto, Hamburg, anstelle von Bentone EW verwendet. Kelzan ist ein organischer Verdicker. Das Molverhältnis betrug 190 Mol SiO₂ pro Mol Na₂O. Gegenüber dem in Ausführungsbeispiel 7 eingesetzten anorganischen Verdicker wurde eine vergleichbare Viskosität der Silikatmischung mit geringerem Zusatz an Verdicker erreicht.

### Ausführungsbeispiel 16

Für die Silikatmischungen wurden das gleiche wässerige Kieselsol und die gleiche wässerige Alkylpolysiloxan-Dispersion wie im Ausführungsbeispiel 1 verwendet. In 380 g des wässerigen Kieselsols wurde als Farbpigment 20 g rotes Eisenoxidpigment mit einer Partikelgröße von weniger als 1 *µ*m eingerührt. Danach wurden als Füllstoffe 360 g Quarzmehl mit einer mittleren Partikelgröße von 30 *µ*m und 40 g Wollastonit-Fasern mit einem Durchmesser von weniger als 200 *µ*m mit Nadelform zugegeben und 10 Minuten lang mit Hilfe eines Dissolvers bei hoher Schergeschwindigkeit von 12 m/s bis 15 m/s dispergiert. Die Länge der Wollastonit-Fasern betrug mehr als des 20-fache des Durchmessers. Anschließend wurde als hydrophobierendes Additiv 20 g der wässerigen Alkylpolysiloxan-Dispersion zugegeben und bei niedriger Schergeschwindigkeit von etwa 3 m/s durchmischt. Eine aus dieser Silikatmischung hergestellte Beschichtung zeigte infolge der Faserverstärkung eine besonders hohe Frostbeständigkeit.

### Ausführungsbeispiel 17

In 380 g eines wässerigen Kieselsols mit einem SiO₂-Gehalt von 30 Gewichts-%, einem Molverhältnis von 148 Mol SiO₂ pro Mol Na₂O und einer mittleren Partikelgröße mit einer spezifischen Oberfläche (BET) von 300 m²/g wurde als Farbpigment 20 g rotes Eisenoxidpigment mit einer Partikelgröße von weniger als 1 µm eingerührt. Danach wurde als Füllstoff 500 g Quarzmehl mit einer mittleren Partikelgröße von 30 *µ*m und als Verdicker 1 g Bentone EW zugegeben und 10 Minuten lang mit Hilfe eines Dissolvers bei hoher Schergeschwindigkeit von 12 m/s bis 15 m/s dispergiert. Anschließend wurde als hydrophobierendes Additiv 20 g der im Ausführungsbeispiel 1 beschriebenen wässerigen Alkylpolysiloxan-Dispersion zugegeben und bei niedriger Schergeschwindigkeit von etwa 3 m/s durchmischt. Die Verwendung des sehr feinteiligen Kieselsols mit nur 30% Feststoffgehalt in Verbindung mit dem hohen Füllstoffanteil ergab eine mineralisch matte Beschichtung.

### Ausführungsbeispiel 18

In 240 g eines wässerigen Kieselsols mit einem SiO₂-Gehalt von 50 Gewichts-%, einem Molverhältnis von 344 Mol SiO₂ pro Mol Na₂O und einer mittleren Partikelgröße mit einer spezifischen Oberfläche (BET) von 140 m²/g mit einer trimodalen Partikelgrößenverteilung, wobei 60 Gewichts-% der Solpartikel eine spezifische Oberfläche (BET) von 50 m²/g, 30 Gewichts-% eine spezifische Oberfläche (BET) von 200 m²/g und 10 Gewichts-% eine spezifische Oberfläche (BET) von 500 m²/g aufweisen, wurde als Farbpigment 20 g rotes Eisenoxidpigment mit einer Partikelgröße von weniger als 1 *µ*m eingerührt. Anschließend wurde als Füllstoff 400 g Quarzmehl mit einer mittleren Partikelgröße von 30 µm und als Verdicker 1,4 g Bentone EW zugegeben und 5 Minuten lang mit Hilfe eines Dissolvers bei hoher Schergeschwindigkeit von 12 m/s bis 15 m/s dispergiert. Danach wurden bei niedriger Schergeschwindigkeit von etwa 3 m/s weitere 140 g des wässerigen Kieselsols und als hydrophobierendes Additiv 20 g der im Ausführungsbeispiel 1 beschriebenen Alkylpolysiloxan-Dispersion zugegeben und durchmischt. Die Verwendung des trimodalen Kieselsols mit 50% Feststoffgehalt und das relativ hohe Molverhältnis von SiO₂ zu Na₂O führten nach dem Aushärten zu einer schwach glänzenden in der Kreidungsprüfung besonders wischbeständigen Beschichtung.

### Ausführungsbeispiel 19

In 240 g eines wässerigen Kieselsols mit einem SiO₂-Gehalt von 55,5 Gewichts-%, einem Molverhältnis von 172 Mol SiO₂ pro Mol Na₂O und einer mittleren Partikelgröße mit einer spezifischen Oberfläche (BET) von 140 m²/g mit einer bimodalen Partikelgrößenverteilung, wobei 70 Gewichts-% der Solpartikel eine spezifische Oberfläche (BET) von 50 m²/g und 30 Gewichts-% eine spezifische Oberfläche (BET) von 200 m²/g aufweisen, wurde als Farbpigment 20 g rotes Eisenoxidpigment mit einer Partikelgröße von weniger als 1 *µ*m eingerührt. Anschließend wurde als Füllstoff 320 g Quarzmehl mit einer mittleren Partikelgröße von 30 µm zugegeben und 5 Minuten lang mit Hilfe eines Dissolvers bei hoher Schergeschwindigkeit von 12 m/s bis 15 m/s dispergiert. Danach wurden bei niedriger Schergeschwindigkeit von etwa 3 m/s weitere 120 g des wässerigen Kieselsols und als hydrophobierendes Additiv 40 g der im Ausführungsbeispiel 1 beschriebenen Alkylpolysiloxan-Dispersion zugegeben und durchmischt. Die Verwendung des bimodalen Kieselsols mit 55,5 Gew.-% Feststoffgehalt und der relativ geringe Anteil an Füllstoff ergaben nach dem Aushärten eine besonders stark glänzende Beschichtung.

### Ausführungsbeispiel 20

Für die Silikatmischungen wurden das gleiche wässerige Kieselsol und die gleiche wässerige Alkylpolysiloxan-Dispersion wie im Ausführungsbeispiel 1 verwendet. In 360 g des wässerigen Kieselsols wurden 40 g ungecoatetes Weißpigment Bayertitan A der Bayer AG, Leverkusen, mit einem Titandioxidgehalt von 99% und einer Partikelgröße von weniger als 1 µm eingerührt. Danach wurden als Füllstoffe 360 g Kalksteinmehl Calibrite SL der Firma Omya, Köln, mit einer mittleren Partikelgröße von 20 *µ*m und 40 g Glimmer mit einer mittleren Partikelgröße von 35 µm sowie 2 g Kelcan und 2 g Bentone EW zugegeben und 5 Minuten lang mit Hilfe eines Dissolvers bei hoher Schergeschwindigkeit von 12 m/s bis 15 m/s dispergiert. Danach wurden bei niedriger Schergeschwindigkeit von etwa 3 m/s 40 g der wässerigen Alkylpolysiloxan-Dispersion zugegeben und durchmischt. Diese Silikatmischung wurde als Fassadenfarbe verwendet und hat eine intensiv weiße, mineralisch matte, kreidungsbeständige und wetterfeste Beschichtung von Zementputz ergeben.

### Ausführungsbeispiel 21

Für die Silikatmischungen wurden das gleiche wässerige Kieselsol und die gleiche wässerige Alkylpolysiloxan-Dispersion wie im Ausführungsbeispiel 1 verwendet. Zu 380 g des wässerigen Kieselsols wurden als Füllstoffe 1060 g Quarzmehl mit einer mittleren Partikelgröße von 30 µm und 160 g Mikrosilika UP 983 der Firma Elkem GmbH, Düsseldorf, mit einer Partikelgröße von weniger als 45 *µ*m zugegeben und 5 Minuten lang mit Hilfe eines Dissolvers bei hoher Schergeschwindigkeit von 12 m/s bis 15 m/s dispergiert. Anschließend wurden 20 g der wässerigen Alkylpolysiloxan-Dispersion zugegeben und bei niedriger Schergeschwindigkeit von etwa 3 m/s durchmischt. Diese Silikatmasse mit sehr hohem Feststoffgehalt wurde als viskose gut fließfähige Gießmasse zur Herstellung massiver Formkörper verwendet. Es wurden feste plattenförmige monolithische Formkörper hergestellt, welche die Konturen der Gießform exakt wiedergeben, rißfrei sind und eine sehr geringe Porosität aufweisen.

### Ausführungsbeispiel 22

In 400 g des in Ausführungsbeispiel 1 beschriebenen bimodalen Kieselsols, das 5 % Ethylenglykol zur Verbesserung der Verarbeitungseigenschaften und der Lagerbeständigkeit bei niedrigen Temperaturen bis -5°C enthielt, wurden als Füllstoff 900 g Schamottemehl mit einer Partikelgröße von weniger als 100 *µ*m und als Verdicker 2,4 g Bentone EW zugegeben und 5 Minuten lang mit Hilfe eines Dissolvers bei hoher Schergeschwindigkeit von 12 m/s bis 15 m/s dispergiert. Anschließend wurden 20 g der in Ausführungsbeispiel 1 beschriebenen wässerigen Alkylpolysiloxan-Dispersion zugegeben und bei niedriger Schergeschwindigkeit von etwa 3 m/s durchmischt. Die so erhaltene Silikatmasse ist eine viskose Paste, die beispielsweise mit einem Spachtel verarbeitbar ist.

Diese Paste ist insbesondere zur Verbindung von Schamotte-Innenrohren beim Versetzen von Hausschornsteinen geeignet.

An zwei der Länge nach halbierten Abschnitten von Schamotterohren mit einem Durchmesser von 170 mm und einer Wandstärke von 15 mm wurde auf je eine Stirnfläche die vorstehend beschriebene Silikatmasse in dünner Schicht aufgetragen, die Rohrabschnitte stirnseitig aufeinander gesetzt und seitlich herausgequollene Silikatmasse abgestrichen. Nach Trocknung während 24 Stunden bei Raumtemperatur wurde im Dreipunkt-Biegeversuch bei 250 mm Stützweite eine Bruchlast von mehr als 1.500 N ermittelt. Die Festigkeit der Verbindung wird weder durch Lagerung in Wasser noch durch Glühen bei Temperaturen bis 1.100°C deutlich beeinträchtigt. Die Verbindung ist säurebeständig.

## Patentansprüche

1. Silikatmasse, die zumindest eine Alkalioxid und Siliziumdioxid enthaltende amorphe Bindermatrix aufweist, wobei
- das Alkalioxid Lithium-, Natrium- und/oder Kaliumoxid ist;
- die amorphe Bindermatrix pro Mol Alkalioxid mehr als 25 Mol Siliziumdioxid enthält,
- die Silikatmasse außerdem pro 1000 g Siliziumdioxid 400 g bis 7000 g Füllstoff enthält, dessen Partikel eine Dicke von weniger als 200 *µ*m besitzen,
- die amorphe Bindermatrix außerdem pro 1000 g Siliziumdioxid in gleichmäßiger Verteilung 10 g bis 150 g eines eingebundenen hydroxyfunktionellen Alkylpolysiloxans enthält.

2. Silikatmasse nach Anspruch 1, **dadurch gekennzeichnet, dass** das Alkylpolysiloxan ein Harz ist, das einen hohen Anteil an linearen Siloxanketten mit einem niedrigen bis mittleren Verzweigungsgrad aufweist.

3. Silikatmasse nach einem der Ansprüche 1 bis 2, **dadurch gekennzeichnet, dass** der Füllstoff säurebeständig ist.

4. Silikatmasse nach mindestens einem der Ansprüche 1 bis 3, **dadurch gekennzeichnet, dass** der Füllstoff kristallin ist, vorzugsweise Quarz oder ein Silikat.

5. Silikatmasse nach mindestens einem der Ansprüche 1 bis 3, **dadurch gekennzeichnet, dass** der Füllstoff amorph ist, vorzugsweise Glasmehl.

6. Silikatmasse nach mindestens einem der Ansprüche 1 bis 5, **dadurch gekennzeichnet, dass** diese Farbpigmente enthält.

7. Verfahren zur Herstellung der Silikatmasse nach mindestens einem der Ansprüche 1 bis 6, **dadurch gekennzeichnet, dass** eine wässrige Silikatmischung verwendet und eingetrocknet wird, wobei die wässrige Silikatmischung ein alkalisches Kieselsol mit mehr als 25 Mol Siliziumdioxid pro Mol Alkalioxid und mit einem Siliziumdioxid-Gehalt im Bereich von 15 bis 65 Gewichtsprozent, vorzugsweise 30 bis 60 Gewichtsprozent, sowie pro 1000 g Siliziumdioxid in gleichmäßiger Verteilung 10 g bis 150 g eines einbindbaren hydrofunktionellen Alkylpolysiloxans zur Bildung der amorphen Bindermatrix und pro 1000 g Siliziumdioxid 400 g bis 7000 g Füllstoff enthält, dessen Partikel eine Dicke von weniger als 200 µm besitzen.

8. Verfahren zur Herstellung der Silikatmasse nach Anspruch 7, **dadurch gekennzeichnet, dass** die Partikel des Kieselsols im Mittel eine spezifische Oberfläche (BET) im Bereich von 35 m²/g bis 600 m²/g, vorzugsweise von 50 m²/g bis 300 m²/g aufweisen.

9. Verfahren zur Herstellung der Silikatmasse nach Anspruch 7 oder 8, **dadurch gekennzeichnet, dass** die Partikel des Kieselsols eine zumindest bimodale Partikelgrößenverteilung aufweisen.

10. Verfahren zur Herstellung der Silikatmasse nach Anspruch 9, **dadurch gekennzeichnet, dass** etwa 40 bis 80 Gewichts-% der Partikel eine spezifische Oberfläche (BET) im Bereich von 30 m²/g bis 100 m²/g und etwa 20 bis 60 Gewichts-% der Partikel eine spezifische Oberfläche (BET) im Bereich von 200 m²/g bis 600 m²/g aufweisen.

11. Verfahren zur Herstellung der Silikatmasse nach einem der Ansprüche 7 bis 10, **dadurch gekennzeichnet, dass** die wässrige Silikatmischung außerdem Farbpigmente enthält.

12. Verwendung der Silikatmasse nach mindestens einem der Ansprüche 1 bis 6, **dadurch gekennzeichnet, dass** eine wässrige Silikatmischung als Beschichtung auf ein Substrat aufgebracht und getrocknet wird.

13. Verwendung der Silikatmasse nach Anspruch 12, **dadurch gekennzeichnet, dass** das Substrat eine Dachpfanne ist.

14. Verwendung der Silikatmasse nach Anspruch 12 oder 13, **dadurch gekennzeichnet, dass** die Dicke der Beschichtung im Mittel zwischen 20 *µ*m und 2 mm, vorzugsweise 0,1 mm beträgt.

## Claims

1. Silicate composition which comprises at least one amorphous binder matrix containing alkali oxide and silicon dioxide, wherein
- the alkali oxide is lithium, sodium and/or potassium oxide,
- the amorphous binder matrix comprises for each mole of alkali oxide more than 25 moles of silicon dioxide,
- the silicate composition in addition comprises for every 1000 g silicon dioxide 400 g to 7000 g of a filler substance whose particles have a thickness of less than 200 *µ*m,
- the amorphous binder matrix comprises in addition for every 1000 g silicon dioxide in uniform distribution 10 g to 150 g of an integrated hydroxy-functional alkyl polysiloxane.

2. Silicate composition as claimed in claim 1, **characterized in that** the polysiloxane is a resin comprising a large fraction of linear siloxane chains with a low to medium degree of branching.

3. Silicate composition as claimed in claims 1 to 2, **characterized in that** the filler substance is resistant to acid.

4. Silicate composition as claimed in at least one of claims 1 to 3, **characterized in that** the filler substance is crystalline, preferably quartz or a silicate.

5. Silicate composition as claimed in at least one of claims 1 to 3, **characterized in that** the filler substance is amorphous, preferably glass powder.

6. Silicate composition as claimed in at least one of claims 1 to 5, **characterized in that** it comprises color pigments.

7. Method for the production of the silicate composition as claimed in at least one of claims 1 to 6, **characterized in that** an aqueous silicate mixture is used and dried, wherein the aqueous silicate mixture comprises an alkaline silica sol with more than 25 moles of silicon dioxide for each mole of alkali oxide and with a silicon dioxide content in the range of 15 to 65 percent by weight, preferably 30 to 60 percent by weight, as well as for every 1000 g silicon dioxide in uniform distribution 10 g to 150 g of an integratable hydroxy-functional alkyl polysiloxane for the formation of the amorphous binder matrix, and for every 1000 g silicon dioxide 400 g to 7000 g of a filler substance whose particles have a thickness of less than 200 µm.

8. Method for the production of the silicate composition as claimed in claim 7, **characterized in that** the particles of the silica sol on average have a specific surface (BET) in the range of 35 m²/g to 600 m²/g, preferably of 50 m²/g to 300 m²/g.

9. Method for the production of the silicate composition as claimed in claim 7 or 8, **characterized in that** the particles of the silica sol have at least a bimodal particle size distribution.

10. Method for the production of the silicate composition as claimed in claim 9, **characterized in that** approximately 40 to 80 percent by weight of the particles have a specific surface (BET) in the range of 30 m²/g to 100 m²/g and approximately 20 to 60 percent by weight of the particles have a specific surface (BET) in the range of 200 m²/g to 600 m²/g.

11. Method for the production of the silicate composition as claimed in one of claims 7 to 10, **characterized in that** the aqueous silicate mixture comprises in addition color pigments.

12. Use of the silicate composition as claimed in at least one of claims 1 to 6, **characterized in that** an aqueous silicate mixture is applied onto a substrate as a coating and is dried.

13. Use of the silicate composition as claimed in claim 12, **characterized in that** the substrate is a roofing pantile.

14. Use of the silicate composition as claimed in claim 12 or 13, **characterized in that** the thickness of the coating on average is between 20 *µ*m to 2 mm, preferably is 0.1 mm.

## Revendications

1. Composition de silicate comportant au moins une matrice liante amorphe qui contient de l'oxyde alcalin et du dioxyde de silicium,
- l'oxyde alcalin étant de l'oxyde de lithium, de sodium et/ou de potassium ;
- la matrice liante amorphe contenant, par mole d'oxyde alcalin, plus de 25 moles de dioxyde de silicium
- la composition de silicate contenant, en outre, entre 400 g et 7.000 g de charges par 1.000 g de dioxyde de silicium, les particules des charges présentant une granulométrie inférieure à 200 µm,
- la matrice liante amorphe contenant, en outre, entre 10 g et 150 g d'un alkylpolysiloxane pourvu de fonctions hydroxyle par 1.000 g de dioxyde de silicium, ledit alkylpolysiloxane y étant intégré en répartition uniforme.

2. Composition de silicate selon la revendication 1, **caractérisée en ce que** l'alkylpolysiloxane est une résine comportant une proportion élevée de chaînes siloxane linéaires dont le degré de ramification est faible à moyen.

3. Composition de silicate selon l'une quelconque des revendications 1 à 2, **caractérisée en ce que** les charges résistent aux acides.

4. Composition de silicate selon au moins une des revendications 1 à 3, **caractérisée en ce que** les charges sont de nature cristalline, s'agissant de préférence de quartz ou d'un silicate.

5. Composition de silicate selon au moins une des revendications 1 à 3, **caractérisée en ce que** les charges sont de nature amorphe, s'agissant de préférence de poudre de verre.

6. Composition de silicate selon au moins une des revendications 1 à 5, **caractérisée en ce qu'**elle contient des pigments.

7. Procédé de production de la composition de silicate selon au moins une des revendications 1 à 6, **caractérisé en ce qu'**un mélange aqueux de silicates est mis en oeuvre pour ensuite être séché, ledit mélange de silicates étant un sol de silice alcalin qui contient plus de 25 moles de dioxyde de silicium par mole d'oxyde alcalin, la teneur en dioxyde de silicium se situant dans la fourchette entre 15 et 65 pour cent en poids, de préférence entre 30 et 60 pour cent en poids, ainsi qu'entre 10 g et 150 g, par 1.000 g de dioxyde de silicium, d'un alkylpolysiloxane pourvu de fonctions hydroxyle, ledit alkylpolysiloxane y étant intégrable et uniformément réparti, ainsi qu'entre 400 g et 7.000 g, par 1.000 g de dioxyde de silicium, de charges, les particules des charges présentant une granulométrie inférieure à 200 µm.

8. Procédé de production de la composition de silicate selon la revendication 7, **caractérisé en ce que** les particules du sol de silice présentent, en moyenne, une surface spécifique (BET) comprise dans la fourchette de 35 m²/g à 600 m²/g et se situant de préférence entre 50 m²/g et 300 m²/g.

9. Procédé de production de la composition de silicate selon les revendications 7 ou 8, **caractérisé en ce que** les particules du sol de silice présentent une granulométrie au moins bimodale.

10. Procédé de production de la composition de silicate selon la revendication 9, **caractérisé en ce qu'**environ 40 à 80 % en poids des particules présentent une surface spécifique (BET) comprise dans la fourchette de 30 m²/g à 100 m²/g alors qu'environ 20 à 60 % en poids des particules présentent une surface spécifique (BET) comprise dans la fourchette de 200 m²/g à 600 m²/g.

11. Procédé de production de la composition de silicate selon l'une quelconque des revendications 7 à 10, **caractérisé en ce que** le mélange aqueux de silicates contient, en outre, des pigments.

12. Utilisation de la composition de silicate selon au moins une des revendications 1 à 6, **caractérisée en ce que** le mélange aqueux de silicates est appliqué en tant que revêtement sur un substrat pour ensuite être séché.

13. Utilisation de la composition de silicate selon la revendication 12, **caractérisée en ce que** le substrat est une tuile de toiture.

14. Utilisation de la composition de silicate selon les revendications 12 ou 13, **caractérisée en ce que** l'épaisseur du revêtement est comprise, en moyenne, entre 20 µm et 2 mm, la valeur préférée étant de 0,1 mm.
